# EUROPÄISCHE PATENTSCHRIFT

(11) **EP 1 110 418 B1**
(45) Veröffentlichungstag und Bekanntmachung des Hinweises auf die Patenterteilung: **28.04.2004**
(21) Anmeldenummer: 99955677.2
(22) Anmeldetag: 08.09.1999
(51) Int. Cl.: H04Q 7/00

(54) **VERFAHREN ZUR OPTIMIERTEN ÜBERTRAGUNG VON MULTIMEDIALEN DIENSTEN IN MOBILEN KOMMUNIKATIONSNETZEN (MOBILFUNKNETZEN)**
METHOD FOR THE OPTIMIZED TRANSMISSION OF MULTIMEDIA SERVICES VIA MOBILE COMMUNICATIONS NETWORKS (MOBILE TELEPHONE NETWORKS)
PROCEDE POUR OPTIMISER LA TRANSMISSION DE SERVICES MULTIMEDIA DANS DES RESEAUX DE TELECOMMUNICATION MOBILES (RESEAUX RADIOTELEPHONIQUES MOBILES)

(30) Priorität: 10.09.1998 DE 19841531
(43) Veröffentlichungstag der Anmeldung: 27.06.2001
(73) Patentinhaber: T-Mobile Deutschland GmbH, 53227 Bonn (DE)
(72) Erfinder: KELLER, Walter, D-40880 Ratingen (DE)
(74) Vertreter: Riebling, Peter, Dr.-Ing.
(86) Internationale Anmeldenummer: PCT/DE1999/002843
(87) Internationale Veröffentlichungsnummer: WO 2000/016569

(56) Entgegenhaltungen:
- EP-A- 0 794 680
- EP-A- 0 844 796
- EP-A- 0 848 560
- WO-A-95/18491
- WO-A-97/26739
- WO-A-98/19438
- CONANT G E: "MULTILINK PPP: ONE BIG VIRTUAL WAN PIPE" DATA COMMUNICATIONS,US,MCGRAW HILL. NEW YORK, Bd. 24, Nr. 13, 21. September 1995 (1995-09-21), Seiten 85-88,90, XP000526197 ISSN: 0363-6399

## Beschreibung

Die Erfindung betrifft ein Verfahren zur optimierten Übertragung von Multimediadiensten in mobilen Kommunikationsnetzen nach dem Oberbegriff des Patentanspruchs 1.

Unter Multimediadiensten wird im Rahmen der vorliegenden Erfindung der anwenderorientierte Betrieb sowie die elektrische Übertragung beliebiger anwenderseitig ausgewählter oder kombinierter Applikationen, wie beispielsweise Sprache, Bild oder Daten, verstanden. Diese Definition ist auf den Anwender (den Nutzer) bezogen. Die anwenderseitig verwendete Technologie ist dabei nicht von Belang. In der Literatur wird hingegen der Begriff Multimedia oft in Kombination mit einer spezifischen Übertragungstechnik, einer Protokolltechnik oder einer besonderen Technologie besetzt. Demgemäß gibt es diverse parallele Standardisierungsaktivitäten unterschiedlicher Interessenverbände.

Das Internet basiert auf dem Routing-Protokoll TCP/IP (Ipv4) der Intemet Engineering Task Force (IETF). Für die unterschiedlichen Anwendungen gibt es zahlreiche konkurrierende Verfahren (WWW, FTP, Chat, e-mail etc.). Die Standardisierung wird weitgehend durch multinationale Softwarehersteller und Universitäten getrieben, was sich durch zahlreiche Derivate, Inkompatibilitäten und Firmenstandards ausdrückt. Dank der anwenderseitigen Implementierung per Software kann der fachkompetente Anwender (zumindest im EDV-/PC-Bereich) die aktuelle Kompatibilität seiner Einrichtungen durch neue Software-Releases herstellen.
Videokonferencing in Telekommunikationsnetzen ist hingegen gemäß H.xxx-Standards (ETSI) obligatorisch (z. B. H.320 für 64 kbit/s ISDN-Übertragung). Der Verbindungsaufbau erfolgt hier durch die gewohnte Ziffernwahl. Die Bild-Codecs (professioneller Bereich) sind in der Regel integrierte Lösungen (Chips). Der Anwender muß kein EDV-Profi sein, Bedienbarkeit und Qualität werden netzseitig garantiert. Die Flexibilität bezüglich Änderungen ist im Gegensatz zum Internet jedoch weniger gegeben.
Daneben gibt es Bildkompressionsverfahren für digitale Bildübertragung, wie MPEG (ETSI), was insbesondere im Hinblick auf Bildtransport, Speicherung und PCbasierter Bildbearbeitung entwickelt wurde. Auch auf Anwendungsebene tummeln sich konkurrierende Lösungen. So ermöglicht der amerikanische Hersteller SUN Microsystems durch seine "Java Produkte" den plattformunabhängigen direkten Austausch von Programmcode zwischen Internet-Server und -Client und damit den interaktiven Betrieb von dynamischen Anwendungen innerhalb der Seitenbeschreibungssprache HTML (Hypertext Markup Language) im WWW, während der ebenfalls amerikanische Hersteller Microsoft den Weg beschreibt, seinen eigenen Internet-Browser mit der Funktionalität des eigenen Betriebssystemes (Microsoft Windows 98) zu kombinieren. Beide Verfahren sind prinzipiell für multimediale Anwendungen ausbaufähig. Weiterhin gibt es digitale Broadcastverfahren, wie DVB, DAB sowie Videostandards, wie DVD etc., die sich auf unterschiedlichem historischen Hintergrund mit jeweils unterschiedlichem Anwendungsschwerpunkt entwickelten und weiterentwickeln.

Für den Anwender sollte die Protokoll- und Übertragungstechnik bei seiner multimedialen Anwendung im Prinzip keinerlei Rolle spielen. In jedem Fall muß eine geeignete technische Vorrichtung für den Betrieb der unterschiedlichen Applikationen und die Zusammenfassung der Datenströme, die Quellen- und Kanalkodierung sowie den Protokollbetrieb und die Datensicherung an der geeigneten Datenschnittstelle zum gewählten Kommunikationsnetz sorgen. Auf dieser Basis sollte der Anwender unter Verwendung der unterschiedlichen Standards das gleiche Ergebnis erzielen.

Wenn man davon ausgeht, daß der "normale" Anwender aus ökonomischen Gründen in der Regel ein relativ schmalbandiges Telekommunikationsnetz für seine multimedialen Anwendungen nutzt, ergeben sich durch die geringe Übertragungsbandbreite je nach gewähltem Verfahren in aller Regel jedoch unterschiedliche Qualitätsprobleme. Diese Probleme werden auch in Zukunft nicht verschwinden. Aus ökonomischen Gesichtspunkten können im Festnetzbereich nicht jedem Kunden beliebige Bandbreiten mit der entsprechenden Vermittlungsinfrastruktur zur Verfügung gestellt werden, die lediglich für eine sehr geringe durchschnittliche Zeitdauer genutzt werden. Im Mobilfunkbereich ist dies vergleichbar. Auch setzt hier die limitierte Ressource "Frequenz" eine zusätzliche ökonomische Grenze.

Die existierenden Multimediastandards kommen im wesentlichen aus zwei unterschiedlichen Anwendungsbereichen. Zum einen beschäftigt sich die Telekommunikationsindustrie zusammen mit den Netzbetreibem seit langer Zeit mit Videotelefonie und multimedialen Diensten. Der Ursprung lag bei hohen Datenraten im wissenschaftlichen Anwendungsbereich und hat bisher eine relativ vertretbare Qualität bei einer Datenübertragungsrate von 64 kbit/s (leitungsvermittelt) für private Anwendungen mit durchschnittlichem Anspruch erreicht. Das Qualitätsproblem wird allgemein auf Netzbetreiberseite gesehen. Der Kunde erwartet bessere Qualität bei gleicher Übertragungsbandbreite - unter Verwendung seines normalen ISDN-So-Hauptanschlusses.
Zum anderen findet eine Integration multimedialer Dienste, wie Telefonie und Bildübertragung im Intemetbereich statt - mit derzeit noch sehr geringe Qualität. In Zukunft sind jedoch auch hier vertretbare Qualitäten insbesondere für den privaten Anwender angekündigt (s.o.). Die Erwartungshaltung hinsichtlich Qualität ist hier jedoch umgekehrt. Wenn der Dienst nichts kostet, wird auch eine geringe Qualität vom Anwender akzeptiert. Anbieter und Kunden gehen in erster Linie davon aus, daß der Anwender das Qualitätsproblem mit einem höherwertigen Telekommunikationsanschluß mit größerer Datenübertragungsrate lösen kann und vertraut auf die kostensenkende Wirkung der Liberalisierung im Telekommunikationsmarkt. Zumal der Anwender im betrieblichen Local Area Network- Umfeld (mit unvergleichbar höherer Datenrate) bereits jetzt sehen kann, daß auch IP-orientierte Anwendungen mit ordentlicher Qualität betrieben werden können, wenn genügend Bandbreite vorhanden ist.

Wo die Zukunft hingeht, wird sich zeigen. Beide Verfahrensweisen besitzen jedoch eine Gemeinsamkeit. Bei der Definition der Kodierungs- und Übertragungsverfahren wird in der Regel von qualitativ hochwertigen Festverbindungen mit Bitfehterraten kleiner 10⁻⁶ ausgegangen. Im Mobilfunkbereich ist die Fehlerrate auf der Luftschnittstelle jedoch in der Regel größer 10⁻³. Um auf der Luftschnittstelle eine vergleichbare Übertragungsqualität zu erreichen, wie im Festnetz, muß daher ein wesentlich größerer Übertragungsaufwand zur präventiven Übertragungssicherung oder wahlweise zur sicheren Rekonstruktion der übertragenen Daten durchgeführt werden, der zudem für unterschiedliche Anwendungen technisch höchst unterschiedlich ausfällt. Beispielsweise wird im GSM-Netz im Sprachbereich eine integrierte forward error correction FEC verwendet, um Sprache mit möglichst hoher Redundanz fehlerfrei zu übertragen, während bei Datenübertragung beispielsweise u.a. die Ende-zu-Ende-Sicherung mit der wiederholten Übertragung fehlerhafter Datenblöcke üblich ist. Eine Blockwiederholung würde bei Sprache oder zeilenorientierter Bildübertragung durchaus zu erheblichen Störungen führen, während eine FEC-Datenübertragung eine erhebliche Verschwendung von Übertragungskapazität bedeuten würde.
Werden alle Multimediaanwendungen im Mobilfunkbereich gemeinsam kodiert und entsprechend einer Bitfehlerraten kleiner 10⁻⁶ übertragen, so führt die höhere Fehlerrate der Luftschnittstelle im Mobilfunkbetrieb bei gleicher Bruttokanalkapazität wie in einem vergleichbaren Festnetz zu einer erheblichen Verringerung der verbleibenden Nettokanalkapazität.

Aus Gründen der Frequenzökonomie wurden im Mobilfunkbereich (GSM-Spezifikationen) daher unterschiedliche Optimierungsverfahren (im wesentlichen Codierungs-, Sicherungs- und Übertragungsverfahren) für die unterschiedlichen Anwendungsschwerpunkte definiert. Man schuf den Begriff "Dienste" und optimierte das Netz hinsichtlich der Sprache, Fax, sowie einer Vielzahl unterschiedlicher Datendienste. Das führte zu einer hervorragenden Qualität der einzelnen Dienste, führte jedoch durch langwierige Standardisierungs- und Implementierungsverfahren sowie durch unflexible technische Schnittstellen auch zu einer sehr geringen Akzeptanz der GSM-Kunden (nur Hochpreis-Segment) sowie zu Inkompatibilitäten mit der schnellebigen EDV-Welt sowie zu komplizierten Anwendungsszenarien.

Ein neuer Dienst, der auf Internet-Protokollstrukturen (IP) basierende General Packet Radio Service (GPRS) wird die Situation für reine Datenanwendungen im GSM-Netz entspannen, ist jedoch keine Lösung für multimediale Anwendungen mit im Datenstrom kodierter Sprach- und Bildinformationen. Die GPRS-Anwender teilen sich gemeinsam eine geringe Anzahl von Übertragungskanälen in Sloted Aloha Random Access-Technik auf der Luftschnittstelle, wodurch ohne aufwendige und teure Ressourcenreservierung keine kontinuierliche Datenübertragungsrate garantiert werden kann. Der Vorteil liegt darin, daß im Hauptanwendungsgebiet "Internetzugang", der Anwender seine Applikation (seine "Dienste") netzunabhängig selbst definieren und nutzen kann.
Zukünftige Netze, wie das in Diskussion befindlich Universal Mobile Telecommunications System (UMTS) werde voraussichtlich nicht mehr eine solche Vielzahl an Übertragungsdiensten besitzen, sondern anwendungsspezifische Übertragungskanäle (Sprache, Daten synchron, Daten asynchron, IP, unterschiedliche Bitraten etc.) zur Verfügung stellen und insbesondere für den IP-Mode größere Bandbreite zur Verfügung stellen. Der gesicherte Betrieb einer bestimmten Applikation samt ihrer Qualitätskriterien wird zunehmend vom Netzwerk auf die Endgeräte verlagert, wobei das Netzwerk lediglich den Übertragungsweg bereitstellt.

Dies ändert jedoch am Grundproblem der Qualität auf der Luftschnittstelle alles nichts. Durch geeignete Übertragungsverfahren des gesamten Multimediastromes kann die Bitfehlerrate auf der Luftschnittstelle zwar verringert werden, auch können durch die Bereitstellung von genügend Bandbreite und Übertragungskanälen ruckfreie Bilder und verständliche Sprache übertragen werde, aus ökonomischen Gründen ist diese Ressourcenverschwendung im Gegensatz zu einer anwendungsbezogenen optimierten Übertragung jedoch weder optimal, noch kommerziell vertretbar.

Ein Ansatz, eine Übertragung verschiedener Dienste in einem Mobilkommunikationsnetz zu optimieren, ist in der EP-A-0 844 796 offenbart. Innerhalb der mobilen Kommunikationsnetze wird eine datenstrukturspezifische Aufteilung und parallele Übertragung des vorliegenden Datenstromes gemäß der vorhandenen und für die jeweiligen Zwecke optimierten Übertragungskanäle des Kommunikationsnetzes durchgeführt, wobei für die vollständige oder teilweise Separation des Datenstroms sowohl eine anwenderseitige Funktionseinheit sowie eine kemnetzseitige, beispielsweise der Funkbasisstation zugeordnete, Funktionseinheit eingesetzt werden. Die jeweils sendene Einheit signalisiert der empfangenden Einheit durch ein spezielles Zuweisungsbit, dass Datenstöme verschiedenen Typs gesendet werden sollen, denen jweils ein geeigneter, freier Übertragungskanal zugewiesen werden soll.

Der vorliegende Erfindung liegt die Aufgabe zugrunde, ein Verfahren vorzuschlagen, auf dessen Basis eine verbesserte Übertragung multimedialer benutzergesteuerter Anwendungen innerhalb eines mobilen Telekommunikationsnetzes mit möglichst hoher Qualität der unterschiedlichen Einzelanwendungen (Quality of Service) und gleichzeitiger Minimierung der erforderlichen Bandbreite auf der Luftschnittstelle (Frequenzökonomie) realisierbar ist.

Gelöst wird diese Aufgabe durch die kennzeichnenden Merkmale des Patentanspruchs 1.

Da auf den Festverbindungs-Backbone-Netzen mehr Bandbreite zur Verfügung steht, als auf der Luftschnittstelle, kann durch dieses Verfahren sowohl eine optimale Frequenzauslastung, als auch eine erhebliche Qualitätssteigerung beispielsweise gegenüber einer integrierten GPRS-Obertragung aller Multimediadaten - mit der Notwendigkeit einer für diesen Fall entsprechend wesentlich höherer Bandbreite erzielt werden.

Ein weitere Vorteil dieser Verfahrensweise besteht darin, daß durch die parallele Ausnutzung von zweckoptimierten, zumindest teilweise vorhandenen Ressourcen auf der Luftschnittstelle erhebliche Infrastrukturaufwendungen mit den entsprechend langen Entwicklungs- und Installationszeiten gegenüber einer generellen Vergrößerung aller Bandbreiten (mit dem zusätzlichen Frequenzproblem) eingespart werden können. Multimediale Dienste lassen sich auf Basis der erfindungsgemäßen Verfahrensweise wesentlich schneller und kostengünstiger bei hohem Qualitätsstandard realisieren.

Vorteilhafte Ausführungswege und Weiterbildungen der Erfindung sind Gegenstand der abhängigen Patentansprüche.

Weiterhin besteht für den Netzbetreiber durch entsprechende Einflußnahme die Möglichkeit zur dynamischen Auslastungsoptimierung seiner Netze und damit zu weiterem Einsparungspotential im Infrastrukturbereich gegenüber umfassenden Kapazitätssteigerungen der unterschiedlichen Übertragungskanäle, die jeweils für den prognostizierten Kommunikationsburst während der Hauptverkehrsstunde dimensioniert sein müssen.

Die Erfindung wird unter Verwendung von Zeichnungsfiguren, die hier lediglich eine mögliche Ausführungsart am Beispiel des verbreiteten GSM-Netzes in schematischer Darstellung beschreiben, erläutert, wobei sich anhand der Zeichnungsfiguren weitere Anwendungsgebiete und Vorteile der Erfindung ergeben.

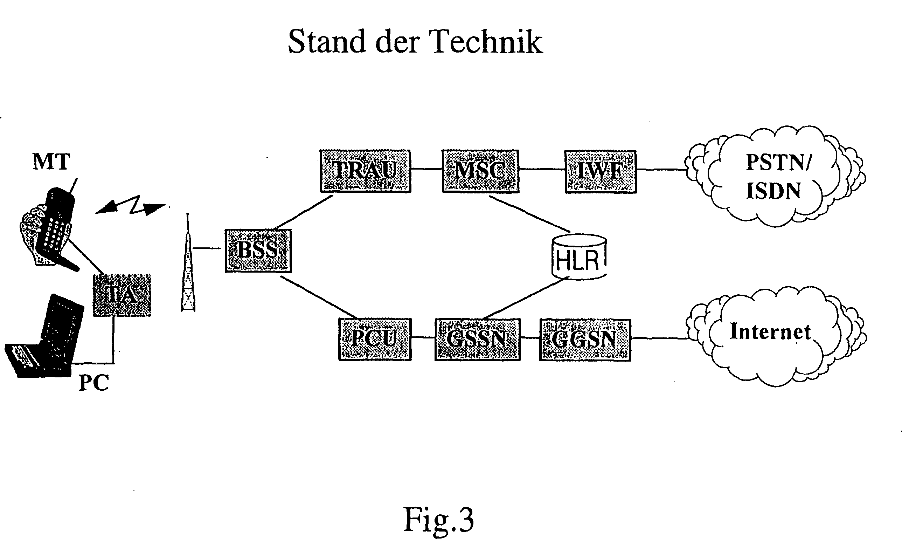

Figur 3 zeigt als Beispiel die konventionelle Verfahrensweise bei der Sprach- und Datenübertragung im GSM-Netz. Der Netzzugang für Sprache und Daten erfolgt über das mobile Terminal (MT), wobei das Mobiltelefon in der Regel bereits den erforderlichen Terminaladaptor (TA) zum Anschluß eines Datenendgerätes (PC) enthält. Die weitere Verbindung erfolgt über die Luftschnittstelle zur Basisstation (BTS, BSS). Auf dieser Strecke werden dienstespezifisch optimierte Übertragungsprotokolle zur effizienten Ausnutzung der Luftschnittstelle gefahren. Diese Protokolle werden in der Transcoder- und Bitratenadaptionseinrichtung (TRAU) in standardisierte ISDN-Protokolle konvertiert (64 kbit/s-A-Low für Sprache, V.110 mit Bitratenadaption für Daten). Die Mobilfunkvermittlungsstelle (MSC) ist damit weitgehend identisch zu einer ISDN-Vermittlungsstelle im Festnetz und steht ihrerseits zur Erfüllung der Mobilitätsanforderungen der Kunden mit der Heimdatenbank (HLR) in Verbindung. Der Netzübergang erfolgt durch die Netzübergangsfunktion (IWF) transparent zum ISDN-Netz, oder per Analog-Modem zum PSTN-Netz.

Der zukünftige Datenübertragungsdienst GPRS erfolgt mittels Paketkontrolleinrichtung (PCU) zum Paketvermittlungsknoten (GSSN) sowie über das Paket-Gateway (GGSN) zum Intemet. Diese Verbindung basiert auf Internet-Protokollstruktur (IP).

Die Auswahl des Übertragungskanals auf der Luftschnittstelle richtet sich dabei fest nach dem verwendeten Dienst, wodurch gleichzeitig die weitere Verbindung leitungsvermittelter Dienste über IWF oder alternativ paketvermittelte Dienste über GGSN definiert ist. Die Diensteauswahl erfolgt je nach den im Netz implementierten Diensten im Endgeräten. Multimediaanwendungen können in diesem Beispiel entweder über Internetzugang betrieben werden, wobei Bild, Sprache und Daten gemeinsam kodiert über GPRS erfolgen, oder alternativ über einen leitungsvermittelten Datendienst (z. B. Bearer Service 26 mit 9,6 kbit/s). Beides ist jeweils nicht optimal. Eine IP-Verbindung zu einem privaten Kommunikationspartner (Corporate Network) erfolgt in diesem Szenario entweder auf dem Internet-Umweg oder direkt per Leitungsvermittlung. Eine professionelle Sprach-und Datenkombination aus der Anwendung heraus ist nicht realisierbar. Möglich ist eine entsprechende Anwendung nur mittels Datenübertragung (s. o.) sowie einer parallel manuell und zusätzlich aufgebauter Sprachverbindung. Der Anwender muß sich demnach bei einer Multimediaverbindung vorab entscheiden, ob er den Sprachkanal, einen leitungsvermittelten oder einen paketvermittelten Datendienst für seine komplette Anwendung verwenden möchte.

Ein weiterer Dienst im GSM-Umfeld ist der High Speed Circuit Switched Data-Mode (HSCSD) Diese Betriebsart nutzt auf der Luftschnittstelle mehrere gekoppelte Übertragungskanäle für die Datenübertragung und eignet sich somit prinzipiell für Anwendungen mit größerer Bandbreite, z.B. Bildübertragung im Streaming-Verfahren. Die Verwendung als Intemet-Zugang ist mittels HSCSD-Mode aus Kostensicht nicht zu vertreten, da Internet-Anwendungen schon aus Anwenderverhalten heraus burstartige Übertragung erfordern und in leitungsvermittelten Systemen erhebliche Overhead-Kosten erzeugen. Ebenso wäre der integrierte Betrieb einer Sprachverbindung in diesem Kanal eine unverantwortliche Verschwendung von Ressourcen. Daher zeigen bisherige Marktstudien eine sehr bescheidene Anwenderakzeptanz zur Nutzung dieses für H.-Kanal Verfahren geeigneten Dienstes mit seiner Kosten- und Ressource-Struktur von n x Sprachkanal.

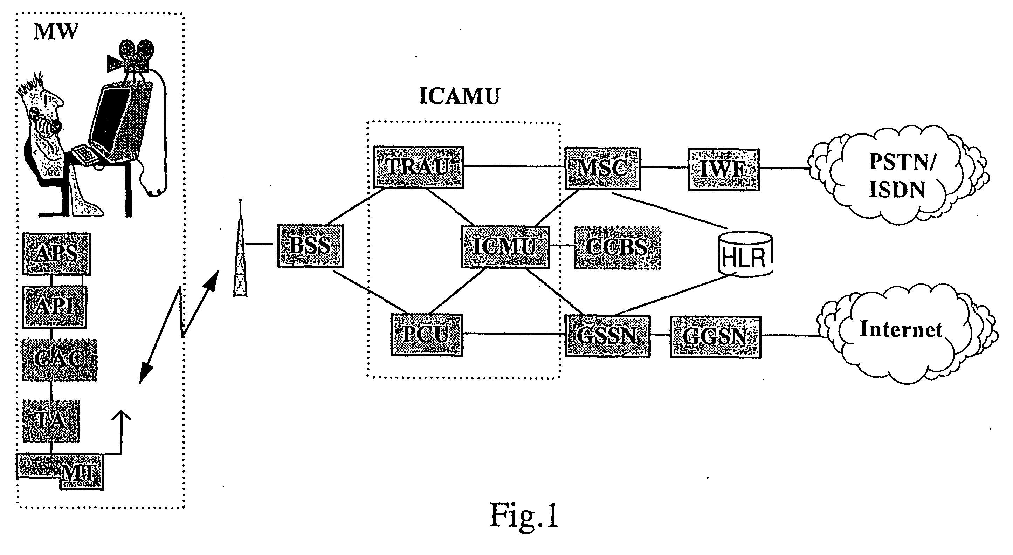

Figur 1 zeigt eine mögliche Ausführungsform des erfindungsgemäßem Verfahrens am Beispiel eines GSM-Netzes.
Der schematisch dargestellte Multimedia-Arbeitsplatz (MW), z. B. ein Notebook mit Videokamera und Freisprecheinrichtung, verfügt in diesem Zusammenhang im wesentlichen über die Softwareapplikation (APS), das Application Programming Interface (API), den neu hinzukommende Channel Access Client (CAC; hier als Bestandteil des Mobile Terminal MT gezeichnet), sowie den Terminaladapter (TA; hier ebenfalls dem MT zugeordnet) und das Mobile Terminal (MT). Letzteres ist hier beispielhaft als PC-Karte abgebildet. Die räumlich körperliche Form des MT kann jedoch beliebig sein, z.B. als Handy oder auch als PC-Card (PCMCIA-Karte) zum bequemen Betrieb am Notebook, PC, oder Digital Personal Assistent (DPA) etc. Wesentlich ist dabei, daß das MT die netzseitig angebotenen Übertragungskanäle (im Mobilfunksprachgebrauch "Dienste") parallel aktivieren und betreiben kann. Kernnetzseitig kommt hier die Intelligente Kanalzugriffs und Management-Einrichtung (ICAMU) hinzu, die zur visuellen Veranschaulichung in der Abbildung aus den, um die Funktionalität der Intelligent Channel Management Unit (ICMU) erweiterten Funktionen TRAU und PCU besteht. Die ICAMU übernimmt als wesentliche neue Funktion die automatische Zuteilung der unterschiedlichen anwendungsoptimierten bzw. datenstrukturorientierten Übertragungskanäle der Luftschnittstelle in vorzugsweise automatischer Zusammenarbeit mit der CAC des Anwenders (Netzbetreiberorientiert, Anwenderorientiert, Kostenorientiert, Resourseorientiert, Performanceorientiert, Quaütätsorientiert etc.) und leitet diese in die entsprechenden Netze (Leitungsvermittelt, Paketvermittelt etc.) weiter.
Diese Vergabe erfolgt soweit möglich, automatisch aus der Applikation heraus, wobei eine optionale händische Einflußnahme und die prinzipielle Konfigurationsmöglichkeit durch den Anwender bestehen sollen. Die optionale Einflußmöglichkeit auf das Kanalzuteilungsverfahren sollte netzbetreiberseitig ebenfalls gegeben sein, wodurch eine dynamische Lastverteilung und Auslastungsoptimierung auf den unterschiedlichen Übertragungskanälen der Luftschnittstelle möglich ist, um insbesondere die für Spitzenverkehrszeiten dimensionierte Kanalkapazität der kompletten Infrastruktur zu reduzieren. Falls der Netzbetreiber bestimmte Funktionalitäten nur auf Vertragsbasis bereitstellt und bepreist, ist eine entsprechende Schnittstelle zwischen ICAMU und Customer Care und Billing System (CCBS) erforderlich.
Die ICAMU übernimmt im angeführten Beispiel zusammen mit dem CAC weiterhin die Analyse der vorliegende Multimediadaten, bzw. der Protokolldiskriptoren, Serviceindikatoren Nutzdaten etc. zwecks Aufteilung und Übertragung auf unterschiedlichen Luftschnittstellen, soweit keine dedizierte Kanalzuweisung gewünscht ist. Weiterhin besteht im ICAMU die Möglichkeit der Protokollkonvertierung von Internet- und Multimediaprotokollen (beidseitig), sowie die optionale Übertragung paketorientierter Daten (IP) über leitungsvermittelte Dienste (PSTN-, ISDN- oder Mobile terminated Zugang), ohne daß hierzu wie im GPRS ein Umweg über Internet erfolgen muß, sowie alternativ die Übertragung leitungsvermittelter Dienste über Luftschnittstelle ins Internet.

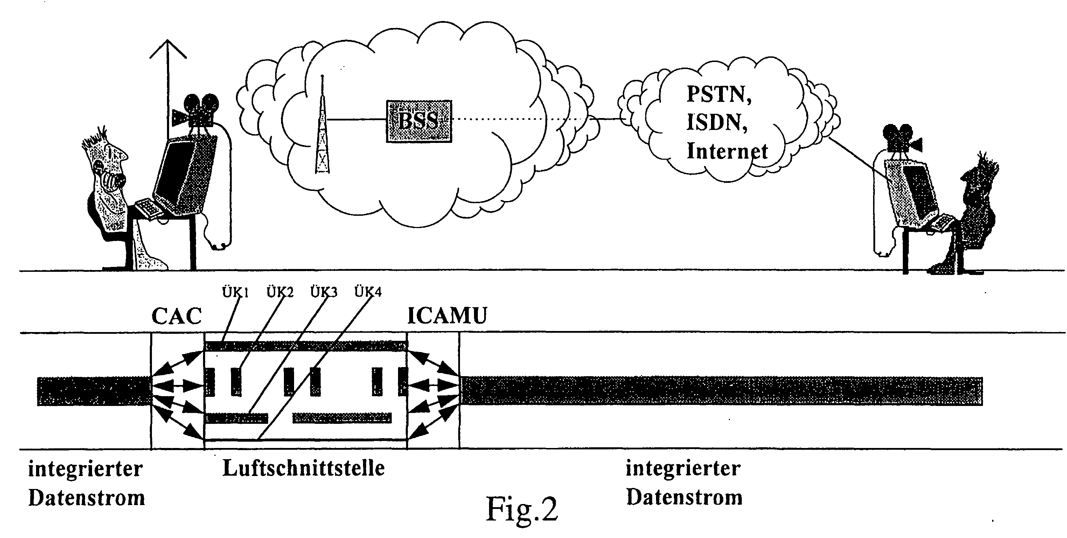

Figur 2 verdeutlicht noch einmal den Transportweg der multimedialen Daten. Der zwischen den Anwendern a und B fließende integrierte Multimedia-Datenstrom wird in den Komponenten CAC und ICAMU anhand geeigneter Deskriptoren, Indikatoren bzw. mittels Datenanalyseverfahren o.ä. erkannt, in seine übertragungsorientierten Bestandteile, wie beispielsweise IP-Paketdaten, kurze Nachrichten, Sprache und kontinuierliche Bildübertragung etc. aufgeteilt, auf der Luftschnittstelle über die mobilfunkspezifischen, für die jeweilige Anwendungsart frequenz-und aufwandsoptimierten, Übertragungskanäle (ÜK1-ÜK4) übertragen und auf der Gegenseite wieder zum Ursprungsdatenstrom zusammengefaßt. Die parallele Übertragung erfolgt dabei für die Anwender transparent.

In einer alternativen Ausführungsform ist auch die teilweise oder vollständige Beibehaltung der parallelen Übertragung im ICAMU sowie die Weiterleitung zu unterschiedlichen Kommunikationspartnern über unterschiedliche Netzübergänge möglich, oder, falls der Kommunikationspartner oder das betreffende Telekommunikationsnetz über vergleichbare Einrichtungen verfügt, ist auch die getrennte Weiterleitung der multimedialen Daten zum gleichen Kommunikationspartner möglich (z. B. eine IP-Verbindung mit integrierter IP-Telefonie, wobei die IP-Daten über Intemet übermittelt werden und die Sprachverbindung auf dem Übertragungsweg automatisch ausgekoppelt, parallel über Festverbindungs-Telefonnetze übertragen und anschließend für die Kundenapplikation wieder zusammengefügt wird). Die unterschiedlichen Verfahren schließen natürlich auch die Kommunikation zwischen Anwendern im gleichen Mobilfunknetz ein.

Die CAC wird vorzugsweise als Softwaretreiber implementiert, während die ICMU in der Regel eine Hardwarevorrichtung darstellt, die jedoch zumindest in den Protokoll-, Konvertierungs- und Algorithmenspezifischen Bestandteilen in Mikroprozessor- bzw. Signalprozessortechnik mit nachladbarer Softwaretechnologie zwecks flexibler Adaption an die sich schnell ändernde Protokollwelt angepaßt werden kann.
Als zusätzlichen Nutzen kann diese Kombination Protokollwandlungen von der IP- in die leitungsvermittelte Welt und umgekehrt etc. für den Anwender vornehmen und somit die Kommunikation auf unterschiedlichen Netzen ermöglichen.

Die Beschreibung gilt hier stellvertretend für beliebig Mobilfunknetze mit jeweils optimierten Übertragungsprozeduren auf beispielsweise der Luftschnittstelle für unterschiedliche Anwendungen (Beispielsweise für Sprach-, Burst-, Streaming- und Messageanwendungen o.ä.) am Beispiel von Struktur und Nomenklatur des GSM-Mobilfunknetz. In adäquater Verfahrensweise kann das erfindungsgemäße Verfahren in beliebigen Mobilfunknetzen, oder bedarfsweise in Festnetzen mit vergleichbarer Problematik zur Anwendung kommen.

### Abkürzungsverzeichnis

- A: Teilnehmer
- API: Appliction Programmable Interface
- APS: Application Software
- B: Teilnehmer
- BSS: Base Station Subsystem (BTS, BSC)
- CAC: Channel Access Client
- CCBS: Customer Care and Billing System
- GGSN: GPRS Gateway Support Node
- GSSN: GPRS Switching Support Node
- HLR: Home Location Register
- ICAMU: Intelligent Channel Access and Management Unit
- ICMU: Intelligent Channel Management Unit
- ISDN: Integrated Services Digital Network
- IWF: Interworking Function
- MSC: Mobile Switching Center
- MT: Mobile Terminal
- MW: Multimedia Workplace
- PC: Personal Computer
- PCU: Packet Control Unit
- PSTN: Private Switching Telecommunication Network
- TA: Terminal Adapter
- TRAU: Transcoder/Rate Adaptor Unit
- ÜK: Übertragungskanal

## Patentansprüche

1. Verfahren zur optimierten Übertragung von Multimediadiensten in mobilen Kommunikationsnetzen, insbesondere Mobilfunknetzen, bei dem innerhalb der mobilen Kommunikationsnetze eine datenstrukturspezifische Aufteilung und parallele Übertragung des vorliegenden Datenstromes gemäß der vorhandenen und für die jeweiligen Zwecke optimierten Übertragungskanäle (ÜK1 - ÜK4) des Kommunikationsnetzes durchgeführt wird, wobei für die vollständige oder teilweise Separation des Datenstroms sowohl eine anwenderseitige Funktionseinheit (CAC) sowie eine kemnetzseitige, beispielsweise der Funkbasisstation zugeordnete, Funktionseinheit (ICAMU) eingesetzt werden,
**dadurch gekennzeichnet,**
**daß** je nach Datenflußrichtung sowohl die anwenderseitige Funktionseinheit (CAC), als auch die netzseitige Funktionseinheit (ICAMU) mittels geeigneter Verfahren ausgestattet sind, um einzelne Applikationen innerhalb der Multimediadatenströme anhand geeigneter Parameter, wie Indikatoren, Diskriptoren, Protokollvarianten, Datenanalyseverfahren o. ä. zu erkennen und demgemäß zu separieren, getrennt zu übertragen und wieder zusammenzufügen.

2. Verfahren gemäß Anspruch 1, **dadurch gekennzeichnet, daß** die datenstrukturspezifische Aufteilung insbesondere zum Überwinden der Luftschnittstelle zum Zwecke der optimalen Ausnutzung der Ressource Frequenz sowie zum Erzielen der jeweils optimalen Übertragungsqualität der Einzelanwendung, bzw. der einzelnen Anwendungen innerhalb einer Multimediaanwendung erfolgt.

3. Verfahren gemäß Anspruch 1 oder 2, **dadurch gekennzeichnet, daß** der datenstrukturspezifisch aufgeteilte Datenstrom nach der parallelen jeweils optimierten Übertragung wieder gemäß dem ursprünglichen Datenstrom derart zusammengefaßt wird, daß das erfindungsgemäße Optimierungsverfahren für den Anwender transparent erfolgt.

4. Verfahren gemäß Anspruch 1 oder 2, **dadurch gekennzeichnet, daß** optional zumindest anwendungsspezifische Anteile des Datenstromes nicht vollständig zusammengefaßt, sondern zumindest teilweise als separater Datenstrom weitergeführt und optional innerhalb des Mobilfunknetzes oder alternativ über unterschiedliche Netzübergänge zu anderen Telekommunikations- oder Datennetzen zu unterschiedlichen Gegenstellen oder anwendungsspezifisch zu der gleichen Gegenstelle geleitet werden (Einfach- oder Mehrfachverbindung).

5. Verfahren gemäß Anspruch 1 - 4, **dadurch gekennzeichnet, daß** sowohl die anwenderseitige Funktionseinheit (CAC), als auch die netzseitige Funktionseinheit (ICAMU) zumindest in ihren Protokoll-, Konvertierungs- und algorithmenspezifischen Bestandteilen vorzugsweise als Software-Module für Mikroprozessoren bzw. Signalprozessoren derart ausgeführt sind, daß eine bedarfsspezifische Nachladung von Teilfunktionalüäten oder alternativ der Gesamtfunktionalität über das Mobilfunknetz möglich ist und damit eine permanente Anpassungsmöglichkeit an neue Verfahren und Protokolle besteht.

6. Verfahren gemäß Anspruch 1 - 5, **dadurch gekennzeichnet, daß** optional eine Verbindung zwischen netzseitiger Funktionseinheit (ICAMU) und dem Customer Care und Billing Sysrem (CCBS) des Netzbetreibers zwecks bedarfsweiser Tarifierung der angebotenen Dienste sowie zur Schaffung und Verifikation der einzelvertraglichen Grundlage bei der anwenderseitigen Inanspruchnahme der erfindungsgemäßen Verfahrensweise besteht.

7. Verfahren gemäß Anspruch 1 - 6, **dadurch gekennzeichnet, daß** die anwenderseitige Funktionseinheit (CAC) und die netzseitige Funktionseinheit (ICAMU) mittels geeigneter Verfahren, vorzugsweise durch Inbandsignalisierung, miteinander kommunizieren, um die Anforderungen an eine optimierte Datenübertragung über unterschiedliche Übertragungskanäle zwischen den Komponenten zu erfüllen.

8. Verfahren gemäß Anspruch 1 - 7, **dadurch gekennzeichnet, daß** die netzseitige Funktionseinheit (ICAMU) als zusätzlicher Anwenderservice optional Konvertierungen der anwenderseitig vorliegenden Datenströme in andere standardisierte Multimedia- oder Protokollformate durchführen kann und diesen bedarfsweise über die geeigneten alternativen Wege weiterleitet.

9. Verfahren gemäß Anspruch 1 - 8, **dadurch gekennzeichnet, daß** zumindest die netzseitige Funktionseinheit (ICAMU) optional Ober geeignete Routing- und Signalisierungsmechanismen verfügt, um anwendungs- bzw. datenstrukturspezifische Anteile von multimedialen Datenströmen über unterschiedliche Übertragungsnetze zu befördern.

10. Verfahren gemäß Anspruch 1 - 9, **dadurch gekennzeichnet, daß** das erfindungsgemäße Verfahren bedarfsweise auch im Festnetzbereich für sinngemäße Anwendungen zum Einsatz kommt.

11. Verfahren gemäß Anspruch 1 - 10, **dadurch gekennzeichnet, daß** das erfindungsgemäße Verfahren durch entsprechende netzbetreiberseitige Einflußnahme der Kanalzuteilungsmechanismen zur dynamischen Lastverteilung und Auslastungsoptimierung der unterschiedlichen Übertragungskanäle und/oder der unterschiedlichen Leitungsnetze verwendet werden kann.

12. Verfahren gemäß Anspruch 1 - 11, **dadurch gekennzeichnet daß** es durch entsprechende anwenderseitige Einflußnahme (Konfigurationsmenue o. ä.) eine kundenindividuelle Auswahl- und Entscheidungsmöglichkeit in möglichst vielen Bereichen, wie Übertragungsgeschwindigkeit, benutzte Dienste, Prioritäten, Quality of Service, Kosten etc. bereitstellt.

## Claims

1. Method for optimized transmission of multimedia services in mobile communication networks, particularly mobile radiotelephone networks, wherein a data-structure-specific splitting-up and parallel transmission of the present data stream is executed within the mobile communication networks in accordance with the existing purpose-optimized transmission channels (ÜK1 - ÜK4) of the communication network, using both a user-side functional unit (CAC) and a core-network-side functional unit (ICAMU), for example a functional unit assigned to the radiotelephone base station, for complete or partial separation of the data stream, **characterized in that** depending on the direction of data flow, both the user-side functional unit (CAC) and the network-side functional unit (ICAMU) are endowed with suitable capabilities for recognizing individual applications within the multimedia data streams by means of suitable parameters such as indicators, descriptors, protocol variants, data analysis techniques or the like, and for separating them, separately transmitting them and recombining them accordingly.

2. Method according to Claim 1, **characterized in that** the data-structure-specific split-up is executed in particular to make optimal use of the frequency resource when negotiating the air interface and to obtain optimal transmission quality for each individual application, or for the individual applications within each multimedia application.

3. Method according to Claim 1 or Claim 2, **characterized in that,** following parallel, optimized transmission, the data stream split up on a data-structure-specific basis is recombined in accordance with the original data stream in such a way that the execution of the optimization method according to the invention is transparent for the user.

4. Method according to Claim 1 or Claim 2, **characterized in that** at least application-specific elements of the data stream are optionally not completely combined, but forwarded at least partly as a separate data stream and optional passed within the mobile radiotelephone network or alternatively via different gateways to other telecommunication or data networks, to different distant ends or on an application-specific basis to the same distant end (single or multiple connection).

5. Method according to Claims 1 - 4, **characterized in that** both the user-side functional unit (CAC) and the network-side functional unit (ICAMU) are preferably designed at least in their protocol-, conversion- and algorithm-specific components as software modules for microprocessors and/or signal processors so as to permit demand-specific reloading of part functionalities or alternatively of the overall functionality via the mobile radiotelephone network so that the possibility exists of making continual adaptations to new methods and protocols.

6. Method according to Claims 1 - 5, **characterized in that** a connection optionally exists between the network-side functional unit (ICAMU) and the customer care and billing system (CCBS) of the network operator for the purpose of charging for the offered services as the need arises and for creating and verifying the individual contractual basis upon user-side utilization of the methodology according to the invention.

7. Method according to Claims 1 - 6, **characterized in that** the user-side functional unit (CAC) and the network-side functional unit (ICAMU) communicate with each other by suitable methods, preferably by in-band signalling, to meet the requirements for optimized data transmission via different transmission channels between the components.

8. Method according to Claims 1 - 7, **characterized in that** the network-side functional unit (ICAMU) is optional capable, as an additional user service, of carrying out conversions of the data streams present on the user side into other standardized multimedia or protocol formats, and forwards these via appropriate alternative paths as the need arises.

9. Method according to Claims 1 - 8, **characterized in that** at least the network-side functional unit (ICAMU) optionally possesses suitable routing and signalling mechanisms for conveying application- and/or data-structure-specific elements of multimedia data streams via different transmission networks.

10. Method according to Claims 1 - 9, **characterized in that** the method according to the invention is also usable for analogous applications in the PSTN sphere as the need arises.

11. Method according to Claims 1 - 10, **characterized in that** the method according to the invention can be used for dynamic load-distribution and loading-optimization of the different transmission channels and/or of the different line networks, through corresponding network-operator-side intervention in the channel allocation mechanisms.

12. Method according to Claims 1 - 11, **characterized in that** through corresponding user-side intervention (configuration menus or the like), it provides facilities for individual customer choices and decisions in an extremely large number of areas, such as transfer rate, services used, priorities, quality of service, costs, etc.

## Revendications

1. Procédé pour optimiser la transmission de services multimédia dans des réseaux de communication mobiles, en particulier dans des réseaux radiotéléphoniques mobiles, selon lequel à l'intérieur des réseaux de communication mobiles, une division propre à la structure des données et une transmission parallèle du flot de données présent sont effectuées selon les canaux de transmission (ÜK1-ÜK4) présents, optimisés pour les besoins respectifs, du réseau de communication, étant précisé que pour la séparation complète ou partielle du flot de données, on utilise aussi bien une unité fonctionnelle prévue côté utilisateur (CAC) qu'une unité fonctionnelle prévue côté réseau de base (ICAMU), associée par exemple à la station radio de base,
**caractérisé en ce que** suivant le sens du flux de données, l'unité fonctionnelle prévue côté utilisateur (CAC) et l'unité fonctionnelle prévue côté réseau (ICAMU) sont équipées de procédés appropriés pour reconnaître et séparer en conséquence, transmettre séparément et réunir des applications individuelles à l'intérieur des flots de données multimédia, à l'aide de paramètres appropriés tels que des indicateurs, des descripteurs, des variantes de protocole, des procédés d'analyse de données, etc.

2. Procédé selon la revendication 1, **caractérisé en ce que** la division propre à la structure des données se fait en particulier pour pallier l'interface radio, en vue d'une utilisation optimale de la fréquence ressource, et pour obtenir la qualité de transmission optimale, à chaque fois, de l'application individuelle ou des applications individuelles à l'intérieur d'une application multimédia.

3. Procédé selon la revendication 1 ou 2, **caractérisé en ce qu'**après la transmission parallèle optimisée à chaque fois, le flot de données divisé spécifiquement en fonction de la structure des données est réuni conformément au flot de données initial de telle sorte que le procédé d'optimisation de l'invention soit transparent pour l'utilisateur.

4. Procédé selon la revendication 1 ou 2, **caractérisé en ce qu'**à titre optionnel, des parties au moins du flot de données qui sont propres à l'application ne sont pas complètement réunies, mais sont retransmises au moins partiellement sous la forme d'un flot de données séparé et sont transmises à titre optionnel à l'intérieur du réseau mobile ou à titre de variante par l'intermédiaire de passerelles différentes à d'autres réseaux de télécommunication ou de données, à des stations distantes différentes ou, spécifiquement en fonction de l'application, à la même station distante (liaison simple ou multiple).

5. Procédé selon les revendications 1 à 4, **caractérisé en ce que** l'unité fonctionnelle prévue côté utilisateur (CAC) ainsi que l'unité fonctionnelle prévue côté réseau (ICAMU) sont conçues de préférence, au moins dans leurs composants de protocole, leurs composants de conversion et leurs composants propres aux algorithmes, comme des modules de logiciel pour des microprocesseurs ou des processeurs de signaux de telle sorte qu'un rechargement, spécifique en fonction des besoins, de fonctionnalités partielles ou, à titre de variante, de la fonctionnalité globale est possible par l'intermédiaire du réseau mobile et qu'il y a ainsi une possibilité d'adaptation permanente à des procédés et des protocoles nouveaux.

6. Procédé selon les revendications 1 à 5, **caractérisé en ce qu'**à titre optionnel, il y a une liaison entre l'unité fonctionnelle prévue côté réseau (ICAMU) et le système d'abonnés et de facturation (CCBS) de l'opérateur du réseau en vue d'une tarification, en fonction des besoins, des services proposés, et de la création et de la vérification de la base contractuelle individuelle lors de l'utilisation, côté utilisateur, du procédé de l'invention.

7. Procédé selon les revendications 1 à 6, **caractérisé en ce que** l'unité fonctionnelle prévue côté utilisateur (CAC) et l'unité fonctionnelle prévue côté réseau (ICAMU) communiquent entre elles grâce à des procédés appropriés, de préférence grâce à la signalisation intrabande, afin de répondre aux exigences d'une transmission de données optimisée, par l'intermédiaire de canaux de transmission différents entre les composants.

8. Procédé selon les revendications 1 à 7, **caractérisé en ce que** l'unité fonctionnelle prévue côté réseau (ICAMU) peut effectuer à titre optionnel, comme service d'utilisateur supplémentaire, les conversions des flots de données présents côté utilisateur en d'autres formats multimédia ou formats de protocole normalisés, et peut transmettre ceux-ci en fonction des besoins par les voies alternatives appropriées.

9. Procédé selon les revendications 1 à 8, **caractérisé en ce que** l'unité fonctionnelle prévue côté réseau (ICAMU), au moins, dispose à titre optionnel de mécanismes d'acheminement et de signalisation appropriés afin d'acheminer des parties de flots de données multimédia qui sont propres à l'application ou à la structure des données par l'intermédiaire de réseaux de transmission différents.

10. Procédé selon les revendications 1 à 9, **caractérisé en ce que** le procédé de l'invention est également mis en oeuvre par analogie, au besoin, dans le domaine des réseaux fixes.

11. Procédé selon les revendications 1 à 10, **caractérisé en ce qu'**on peut utiliser le procédé de l'invention en influant d'une manière appropriée, côté opérateur, sur les mécanismes d'affectation des canaux pour la répartition de charge dynamique et l'optimisation d'utilisation des différents canaux de transmission et/ou des différents réseaux de distribution.

12. Procédé selon les revendications 1 à 11, **caractérisé en ce que** grâce à l'influence appropriée exercée côté utilisateur (menus de configuration, etc.), il offre une possibilité de sélection et de décision individuelle pour chaque client dans le plus grand nombre possible de domaines, comme la vitesse de transmission, les services utilisés, les priorités, la qualité du service, les coûts, etc.
